# EUROPEAN PATENT APPLICATION

(11) **EP 3 106 307 A2**
(43) Date of publication of application: **21.12.2016**
(21) Application number: 16174925.4
(22) Date of filing: 17.06.2016
(51) Int. Cl.: B32B 37/20, B32B 37/00, B32B 38/16, B32B 37/06, B32B 37/08, B32B 38/00

(54) **METHOD AND APPARATUS FOR MANUFACTURING A LAMINATED FOIL STACK CONSISTING OF AT LEAST A FIRST FOIL AND A SECOND FOIL**

(30) Priority: 19.06.2015 NL 2014996
(71) Applicant: VDL Enabling Technologies Group B.V., 5652 AW Eindhoven (NL)
(72) Inventor: VAN DER MEULEN, Michiel, 5652 AW EINDHOVEN (NL); KNAAPEN, Raymond Jacobus Wilhelmus, 5652 AW EINDHOVEN (NL)
(74) Representative: Algemeen Octrooi- en Merkenbureau B.V.

(57) **Abstract**

Method and apparatus for manufacturing a laminated foil stack consisting of at least a first foil (1) and a second foil (2) . The method comprising at least the steps of:
i) supplying said at least first foil (1) to a first initial work position (110) in a process chamber (101);
ii) supplying said at least second foil (2) to a second initial work position (120) in said process chamber (101);
iii) conditioning the environment inside said process chamber (101);
iv) subjecting at least said first foil (1) to a pre-conditioning process step;
v) laminating said conditioned first foil(1) and said second foil (2) thereby obtaining said laminated foil stack in a final work position (140).

## Description

The invention relates to a method for manufacturing a laminated foil stack consisting of at least a first foil and a second foil.

The invention also relates to an apparatus for manufacturing a laminated foil stack consisting of at least a first foil and a second foil.

Laminated foil stacks are generally known in the art and in particular known as packaging foils for containing pharmaceuticals, dairy products or soft drinks. Such laminated foil stacks are known for their moisture vapor resistance and high barrier properties. Due to its many applications it is desirable that such laminated foil stacks are manufactured under controlled conditions, such to avoid the resulting laminated foil stacks from suffering reduced moisture vapor resistance or reduced barrier properties.

In particular when manufacturing flexible organic light-emitting diode (OLED) foils high standards are requested from both the individual starting foils being used as well as the conditions under which the laminating process is taking place.

In order to improve the laminating conditions and thus the quality of the resulting laminated end product a method for manufacturing a laminated foil stack consisting of at least a first foil and a second foil is proposed, comprising at least the steps of:
i) supplying said at least first foil to a first initial work position in a process chamber;
ii) supplying said at least second foil to a second initial work position in said process chamber;
iii) conditioning the environment inside said process chamber;
iv) subjecting at least said first foil to a pre-conditioning process step;
v) laminating said conditioned first foil and said second foil thereby obtaining said laminated foil stack in a final work position.

By pre-conditioning the environment wherein the foils are stored prior to laminating at least one but preferably both foils are pre-conditioned. The pre-conditioning step improves the resulting laminated foil stack guaranteeing its desired properties required for its application (package, etc.). Furthermore the pre-conditioning step ensures that the pre-conditioned foil exhibits improved and in particular homogenous quality characteristics over its entire foil length resulting in a like homogenous laminated foil end product stack.

More in particular the method according to the invention is further characterized, in that step iv) comprises the step of supplying said first foil from said first initial work position to an intermediate work position in said process chamber whilst subjecting said first foil to said pre-conditioning process step.

Herewith an automatic pre-conditioning is performed without disrupting the environment conditions inside the process chamber, thus preventing any impurities from entering the process chamber.

A further improved automatic pre-conditioning according to the method is characterized in that, wherein step iv) further comprises the step of supplying said first foil from said intermediate work position back to said first initial work position and more in particular wherein step vii) is being performed whilst subjecting said first foil to said pre-conditioning process step. In particular the sequence of steps iv) and vii) is performed two or more times.

In particular step iv) consists of a drying treatment or consists of a pre-heating treatment or consists of a radiation treatment.

In an advantageous embodiment method according to the invention is characterized in that step v) is preceded by at least the steps of positioning a trailing edge of said second foil from said second initial work position in a lamination work position; positioning a trailing edge of said conditioned first foil from said first initial work position in said lamination work position; and aligning said first and second foil by pressing said first foil onto said second foil. This guarantees improved and in particular homogenous quality characteristics over its entire foil length resulting in a like homogenous laminated foil end product stack.

In a further embodiment of the method according to the invention step iv) further comprises the step of xi) subjecting said second foil to a conditioning process step, wherein step xi) consists of a pre-heating treatment. The pre-conditioning of also the second foil guarantees improved and in particular homogenous quality characteristics over its entire foil length resulting in a like homogenous laminated foil end product stack.

According to the invention the apparatus for manufacturing a laminated foil stack consisting of at least a first foil and a second foil comprises at least:
* a process chamber at least containing
* a first supply means for accommodating a certain length of a first foil
* a second supply means for accommodating a certain length of a second foil;
* laminating means for laminating said first and second foil being supplied from said first and second supply means thereby obtaining said laminated foil stack;
* collecting means for collecting said laminated foil stack, said apparatus further comprising:
   * conditioning means for conditioning the environment inside said process chamber; as well as
   * first pre-conditioning means for pre-conditioning at least said first foil prior to laminating.

Herewith a pre-conditioned environment is created and maintained during the laminating process, which guarantees improved and in particular homogenous quality characteristics over its entire foil length resulting in a like homogenous laminated foil end product stack.

In particular the apparatus according to invention is characterized in that the conditioning means are arranged in controlling the temperature and/or the pressure and/or the gas composition inside the process chamber.

In particular said first pre-conditioning means comprise a pre-conditioning area as well as conveyor means for conveying said first foil from said first supply means through said pre-conditioning area towards said collection means. Said conveyor means are arranged in conveying said first foil back and forth between said collection means and said first supply means. With these features a conditioned environment within the process chamber is guaranteed resulting in improved and in particular homogenous quality characteristics over its entire foil length of at least the first foil and in an additional embodiment also of the other foil (or foils), which will result in a like homogenous laminated foil end product stack.

In particular the first pre-conditioning means comprise at least one at least one radiation element for subjecting said first foil to radiation.

In said additional prior mentioned embodiment said second supply means comprise second pre-conditioning means for pre-conditioning said second foil prior to laminating. In said additional prior mentioned embodiment said second pre-conditioning means may comprise at least one radiation element for subjecting said second foil to radiation or may comprise at least one cooling element for cooling said second foil or may comprise at least one pressure roller for applying a pressure force on said second foil.

In a further beneficial embodiment of the apparatus said laminating means comprise a laminating drum as well as a laminating roller, which laminating drum and laminating roller are movable with respect to each other. In particular said laminating means comprise a contact roller for contacting said first foil and said second foil prior to laminating. This guarantees a proper contact between the foils during laminating thus ensuring improved and in particular homogenous quality characteristics over its entire foil length resulting in a like homogenous laminated foil end product stack.

In particular said pressure roller and/or said laminating drum and/or said laminating roller and/or said contact roller are provided with heating means for pre-heating their respective contact surface.

The invention will now be described in more details in reference to the accompanying drawings, which drawings show in:
Figure 1a-1d different process laminating steps according to a method according to the invention in an apparatus according to the invention;
Figure 2 an embodiment of an apparatus according to the invention.

For a better understanding of the invention like parts in the drawings are to be denoted with like reference numerals.

Reference number 100 denotes throughout the figurative description an apparatus for manufacturing a laminated foil stack 3, which foil stack consists of at least a first foil 1 and a second foil 2. Laminated foil stacks are generally known in the art and in particular known as packaging foils for containing pharmaceuticals, dairy products or soft drinks. Such laminated foil stacks are known for their moisture vapor resistance and high barrier properties. Due to its many applications it is desirable that such laminated foil stacks are manufactured under controlled conditions, such to avoid the resulting laminated foil stacks from suffering reduced moisture vapor resistance or reduced barrier properties.

In particular when manufacturing flexible organic light-emitting diode (OLED) foils high standards are requested from both the individual starting foils being used as well as the conditions under which the laminating process is taking place. In particular, when laminating a barrier film on a water-sensitive foil device, such as an OLED, moisture or water already present can adversely affect the resulting laminated foil stack. Usually such water contamination is to be removed by a thermal drying process, such as an oven prior to lamination. In practice, both starting products are to be heated for several minutes to hours until all water or moisture have been removed. Unfortunately due to the materials of which such foils are made from, the drying conditions are limited by a maximum allowed temperature of the materials used.

Further handling of the now dried starting foil materials to the stage where laminating is taking place may result in a renewed contamination of the starting foil materials with moisture or other contaminations such as dust, which ultimately may adversely affect the laminating result.

The apparatus 100 according to the invention proposes a solution for the risk of contamination of the starting foil materials by moisture and/or other contamination in that it comprises a process chamber 101 as well as conditioning means 102 which are arranged in conditioning the environment inside the process chamber 101.

Furthermore the apparatus 100 comprises first supply means 110 arranged for accommodating a certain length of a first foil 1 as well as second supply means 120 arranged for accommodating a certain length of a second foil 2. Both first and second supply means 110 and 120 containing the first and second foil are accommodated inside the process chamber 101. This assures that the first and second foil are processed inside the conditioned process chamber 101 thus limiting the risk of contamination and ensuring improved and in particular homogeneous quality characteristics over its entire length of the laminated foil stack 3.

According to the invention the apparatus 100 further comprises first pre-conditioning means 150 accommodated inside said process chamber 101. The first pre-conditioning means 150 are arranged in pre-conditioning at least the first foil 1 prior to the laminating step with the second foil 2.

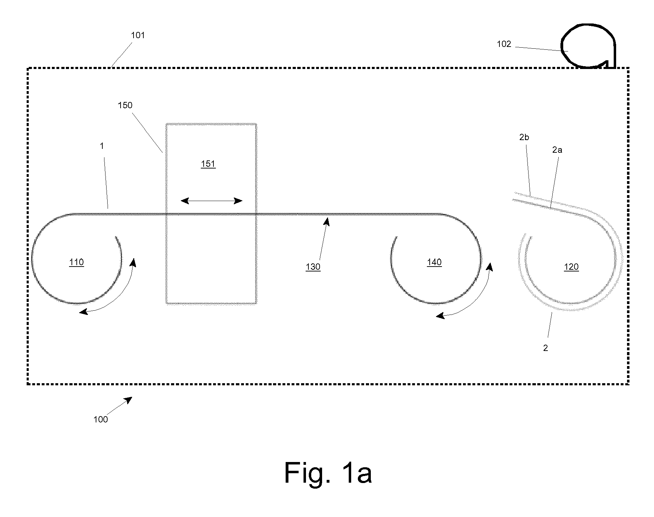

As shown in Figure 1a the first foil 1 is pre-stored in the first supply means 110, said first supply means 110 may consist of a first supply reel on which a sufficient amount of length of the first foil 1 is stored in multiple windings. Likewise the second supply means 120 may comprise a second supply reel on which a sufficient amount of length of the second foil 2 is collected in multiple windings.

The first pre-conditioning means 150 are provided with conveyor means (not shown) for conveying the first foil 1 from their first work position (the first supply means 10) through the pre-conditioned area 151 towards an intermediate work position, being collecting means denoted with reference numeral 140. The collecting means 140 may comprise a collecting reel on which the pre-conditioned foil 1 is to be collected. During the conveying of the first foil from the first work position (the first supply means 110) towards the intermediate work position as denoted by the collecting means 140, the foil 1 is conveyed through the pre-conditioned area 151 of the pre-conditioning means 150.

Said conveyed first foil 1 is thus subjected to a pre-conditioning process step which takes place inside the pre-conditioned area 151. The pre-conditioning process step may comprise a curing step for curing the surface of the first foil 1 before it is laminated to the second foil 2 in the subsequent laminating process step described further in this specification. However, the first foil 1 can also be subjected to other pre-conditioning process steps such as a radiation treatment wherein the foil 1 is subjected to radiation emitted by a radiation emitting source (not shown) being positioned near or in the pre-conditioned area 151 or the pre-conditioning process step can be a drying treatment in order to remove moisture or other ethereal components being present in or on the first foil 1 prior to the depositing in the process chamber 101 of the apparatus 100.

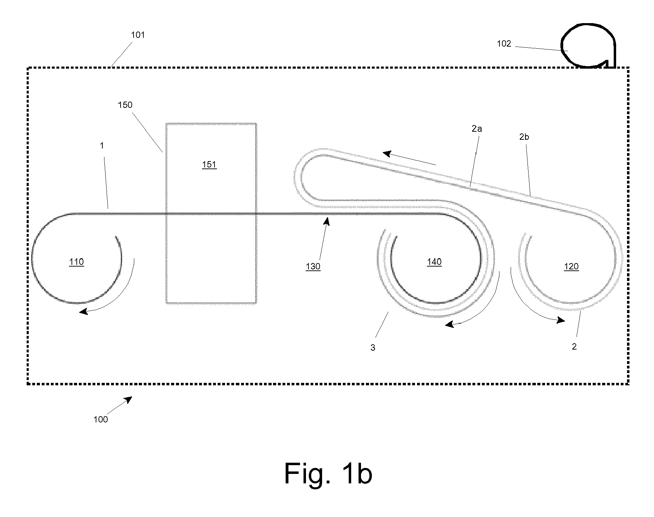

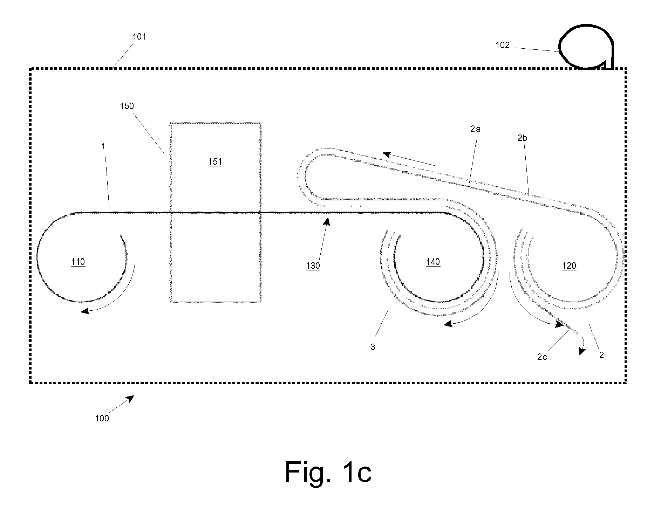

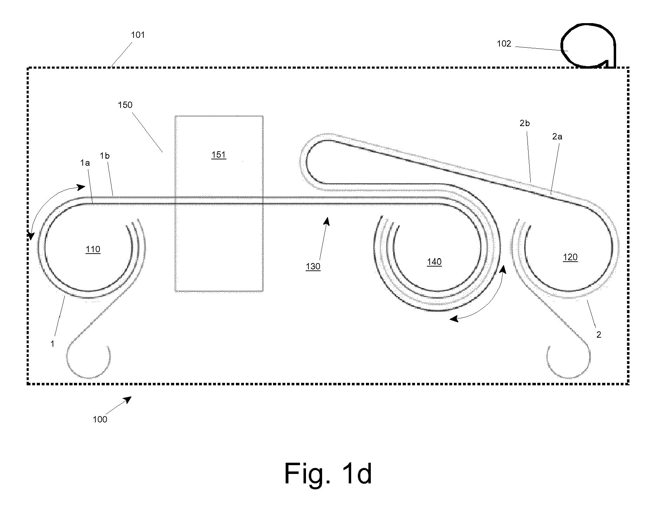

Depending on the conditions or the materials being processed the pre-conditioning process step being conducted on the foil 1 in the pre-conditioned area 151 of the pre-conditioning means 150 can be repeated multiple times as the conveyor means of the pre-conditioning means 150 are arranged in conveying said first foil 1 back and forth between the collecting means 140 (intermediate work position of the method according to the invention) and the first supply means 110 (first work position of the method according to the invention). This is denoted in Figures 1 a with the double arrow near the first supply means 110 and the collecting means 140.

Figure 1b discloses the stage of operation of the apparatus 100 during the laminating step. Both the first and second supply means 110 and 120 supply the (now pre-conditioned) first foil 1 and the second foil 2 towards laminating means 130 which laminate the pre-conditioned first foil 1 and the second foil 2, thereby obtaining a laminated foil stack 3. The laminated foil stack 3 is collected in multiple windings on the collecting reel of the collecting means 140 (now considered being the final work position of the method according to the invention). Once both the first foil 1 and second foil 2 are completely unwound from the first and second supply means 110 and 120 respectively and laminated together using the laminating means 130, the laminated foil stack 3 is collected onto the collecting means 140 and can be removed from the apparatus 100 for further handling.

Entrance to the process chamber 101 without disturbing the conditioned environment inside the process chamber 101 (and avoiding any disturbance of the controlled conditions during which the laminating process takes place) is possible via so-called glove-boxes. Glove-boxes allow removal of the laminated foil stack or allow other handling operations such as cutting foil or replacing foil or handling standstill.

Subsequently the apparatus 100 can be prepared for a new laminating batch, that is providing the first supply reel 110 with a new batch of unconditioned first foil 1 and providing the second supply reel 120 with a new batch of second foil 2.

Although both the first and second foil 1 and 2 respectively can consist of one single foil material it will be clear for the invention that the methods and apparatus according to the invention can be implemented for more than two foils to be laminated together thus forming a laminated foil stack of two-three or even more foils stacked together be means of laminating.

It is also possible - as shown in Figures 1a and 1b - to use multi-sheet foils. Here the first foil 1 consists of a single sheet foil whereas the second foil 2 consists of two foil sheets 2a-2b. In particular the foil sheet 2b can be an adhesive used to promote the laminating step when laminating the first foil 1 and the second foil 2 together. Such adhesive foil 2b can be for example be a pressure sensitive adhesive (PSA). In an embodiment as shown in Figure 1c the second foil 2 (2a-2b) can be provided with an additional protective liner foil 2c protecting the adhesive foil 2b prior to the laminating process by the laminating means 130. The liner foil 2c is to be removed with suitable peeling means near the second supply means 120 prior to the supply of the second foil 2 (2a-2b) from the supply reel of the second supply means 120 towards the laminating means 130.

In a similar fashion also the first foil 1 can be composed of two or more foil sheets 1a-1b-etc. wherein reference numeral 1a denotes a carrier foil and reference numeral 1 b denotes an adhesive layer or a color layer or any other subsequent foil sheet having a particular function/characteristic.

In a similar fashion prior to the laminating process of both foils 1 and 2 by means of the laminating means 130 a pre-conditioning process step is to be performed onto the foil 1 (1a-1b) using the pre-conditioning means 150 by conveying the first foil 1 from its initial work position at the first supply means 110 towards and through the pre-conditioned area 151 of the pre-conditioning means 150 towards the intermediate work position (the collecting means 140). As stipulated earlier in the description the pre-conditioning step to be performed by the pre-conditioning means 150 in the pre-conditioned area 151 can be a drying treatment which can be performed in a purged environment, that is by purging the pre-conditioned area 151 with high purity nitrogen (N₂) or an other inert gas.

Also the pre-conditioning step can comprise a pre-heating step using pre-heating means (not depicted) which are positioned near or in the pre-conditioned area 151. Another pre-conditioning step can be a radiation treatment by subjecting the foil 1 being conveyed through the pre-conditioned area 151 with radiation. The radiation used can be any electromagnetic radiation depending on the pre-conditioning requirements, such as infrared or other forms of electromagnetic radiation.

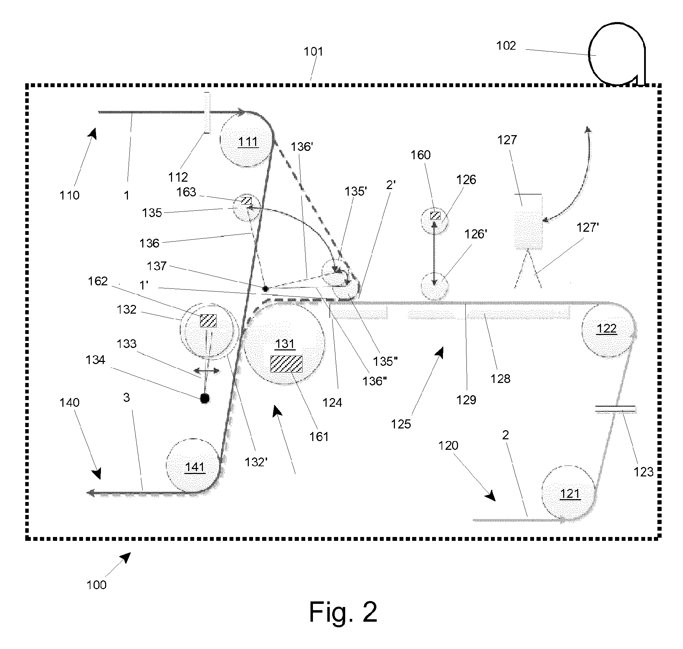

Figure 2 discloses in more detail an embodiment of an apparatus 100 according to the invention. The conveying means - arranged conveying the first foil 1 from the first supply means/first supply reel 110 through the pre-condition means 150 to back and forth to the collecting means 140 - comprise a first roller 111 as well as a second roller 141. Reference numeral 112 denotes a detector for sensing the leading edge 1' of the first foil 1 once conveyed through the apparatus 100. The sensing of the leading edge of the first foil 1 will trigger subsequent process steps such as the activation of the second supply means 120 for supplying the second foil 2 towards the lamination means 130 as well as for triggering the pre-condition means 150.

Likewise the second supply means 120 comprise a first supply roller 121 and a second supply roller 122 as well as a detector 123 for sensing the leading edge 2' of the second foil 2 when supplied from the second supply reel 120 towards the laminating means 130.

The laminating means 130 comprise a laminating drum 131 over which both the first foil 1 and the second foil 2 are transported towards a laminating roller 132 which finalizes the laminating thus obtaining a laminated foil stack 3 consisting of the now laminated first and second foils 1 and 2 respectively. The laminating roller 132 and the laminating drum 131 are movable with respect to each other, allowing both the first foil and second foil 2 to be accommodated between both laminating parts and to be laminated together thus forming the laminated foil stack 3.

In this embodiment the laminating roller 132 is movable accommodated in the apparatus 100 whereas the laminating drum 131 is positioned in a stationary configuration. The laminating roller 132 can be movable with respect to the laminating drum 131 using suitable moving means. In this embodiment the laminating roller 132 is mounted to a movable laminating roller support axis 133 which is movable around a pivot point 134. The two work positions of the laminating roller 132 are denoted with reference numeral 132 (depicting the initial work position) and reference numeral 132' denoting the operating work position. In the latter operating work position 132' the laminating roller is pivoted around the pivot point 134 and is placed against the laminating drum 131.

This presses the first foil 1 and the second foil 2 together when conveyed between the laminating drum 131 and the laminating roller 132 thus accomplishing the laminating and forming a laminated foil stack 3 which is conveyed via the second roller 141 of the conveying means towards the collecting means 140. There the laminated foil stack 3 is collected in multiple windings onto a collecting reel. In order to improve the laminating process between the laminating drum 131 and the laminating roller 132 at least one of the laminating drum 131 or the laminating roller 131 can be provided with heating means 161 and 162 respectively. These pre-heating means are arranged in pre-heating the drum surface of the laminating drum 131 or the roller surface of the laminating roller 132 thus improving and accelerating the laminating process.

Depending on the desired configuration either the laminating drum 131 or the laminating roller 132 can be provided with heating means (161 or 162) or in another configuration both the laminating drum and the laminating roller can be provided with such heating means.

The laminating means 130 furthermore comprise a contact roller 135 which is movable mounted in the apparatus using a support axis 136 which can be displaced around a pivot point 137 between an initial work position (depicted with reference numeral 135) and an intermediate work position (depicted with reference numeral 135') and an operating work position (depicted with reference numeral 135"). The contact roller 135 serves to bring the first foil 1 in contact with the second foil 2 prior to the laminating process to be performed at the laminating means 130. Prior to the laminating process the first foil 1 is conveyed from the first supply means 110 over the first roller 111 towards the lamination means 130. The contact roller 135 being positioned in its initial position as shown in Figure 2 is displaced towards its intermediate work position 135' collecting the first foil 1 towards the location of the leading edge 2' of the second foil 2, which leading edge 2' is being positioned at a laminating position 124 near the laminating means 130.

In particular the leading edge 1' of the first foil 1 is aligned with the leading edge 2' of the second foil 2. For initiating the laminating process the contact roller 135 (being brought in the intermediate work position 135') is displaced further towards an operating work position 135" thus aligning and contacting the leading edge 1' of the first foil 1 with the leading edge 2' of the second foil 2. Once the leading edge 1' of the first foil 1 and the leading edge 2' of the second foil 2 are being pressed together, thus forming a leading edge of the laminated foil stack 3 the contact roller 135 (in its operating work position 135") hinged back towards the intermediate work position 135') allowing a further conveyance of the leading edge of the laminated foil stack 3 between the laminating drum 131 and the contacting roller 132. This operational stage avoids a "peeling off" phenomenon of both the first foil 1 and the second foil 2 due to foil tension stresses present in both lengths of the first foil 1 and second foil 2, which foil tension stresses might overcome the initial adhesive tension stress between both trailing edges 1' and 2' of the first foil 1 and second foil 2 respectively.

Subsequent both now contacted foil 1 and foil 2 (forming the trailing edge 3' of the laminated foil stack 3) are being conveyed over the laminating drum 131 and laminated together using the laminating roller 132, which presses both the first foil 1 and the second foil 2 together forming the laminated foil stack 3. At that stage the contact roller 135 (in its intermediate work position 135') is further hinged back towards its initial work position 135 as shown in Figure 2.

In a similar fashion as outlined previously in the description also the contact roller 135 can be provided with pre-heating means 163 for preheating both the first foil 1 and the second foil 2 at the aligning position 124 as a preparatory process step prior to the actual laminating process being performed.

Reference numeral 125 denotes second pre-conditioning means for pre-conditioning the second foil 2 prior to the laminating step at the laminating means 130. The second pre-conditioning means 125 may comprise different pre-conditioning devices denoted with reference numerals 126, 127 and 128 which can be implemented separately or combined depending on the desired pre-conditioning process steps to be performed on the second foil 2 prior to the laminating process step. Reference numeral 126 denotes a pressure roller, which can be brought from an initial work position (denoted with reference numeral 126) towards a operating work position denoted with the reference numeral 126' for applying a pressure force onto the second foil 2 being conveyed by the second supply means 120 over a contact surface 129.

The pressure roller 126 can be provided with suitable pre-heating means 160 for pre-heating the second foil 2 during its transport over the contact surface 129 towards the laminating position 124. In a similar fashion the second pre-conditioning means 125 may comprise a radiation device 127 for emitting radiation 127' towards the second foil 2 being transported over the contact surface 129. The radiation 127' being emitted can be any type of electro-magnetic radiation, for example infrared radiation depending on the pre-conditioning process step to be performed on the second foil 2.

In particular the contact surface 129 can be provided with a pre-conditioning device 128 which could be configured as a cooling element for cooling down the second foil 2 after being pre-heated by either the pre-heated roller 126 or the radiation device 127.

It is evident that with the configuration of the apparatus 100 according to the invention a controlled environment is created in which one or more foils are laminated to each other thus forming a laminated foil stack which can be used for all kind of applications requiring improved and more in particularly homogeneous quality characteristics over its entire foil length. The obtained laminated foil end product stack 3 has improved product characteristics. In particular when such laminated foil stack is to be used for the manufacturing of OLEDs the pre-conditioning of one (or both) of the foils using the pre-conditioning means 150 (and/or 125-126-127-128) significantly reduces any water or moisture ingress.

As a result the lifespan of the laminated foil end product is significantly increased and rejected end products is reduced. Furthermore with the apparatus 100 according to the invention and the method according to the invention a well-controlled in-line manufacturing of laminated foil stack products is achieved which is not only cheap in terms of operational costs but moreover has limited constructional dimensions allowing the manufacturing of laminated foil end products in a quick batch-like manner.

As the apparatus 100 is completely environment conditioned using the process chamber 101 in which both the first and second foil 1 and 2 are stored prior to the laminating process, in which process chamber also the pre-conditioning of at least one of the first or second foils is being performed no disruption from the outer atmosphere can take place until the laminating process is completed and a laminated foil end product 3 is obtained having homogeneous quality characteristics over its entire foil length.

Furthermore due to its configuration of the pre-conditioning means 150 the first foil 1 can be subjected to subsequent pre-conditioning process steps by conveying the first foil 1 back and forth between the first supply means 110 and the collecting means 140 (the intermediate work position) allowing an improved control of the pre-condition of at least the first foil 1 prior to the laminating process. During the pre-condition process steps of the pre-conditioning means 150 the desired conditioning characteristics of the first foil 1 can be monitored continuously using suitable sensors present in the pre-conditioning area 151, thus allowing direct adaptations or alterations to the pre-conditioning step to be performed in terms of processing time, processing temperature etc.

### REFERENCE NUMERALS

- 1: first foil
- 1': leading edge of first foil
- 1a: first carrier foil
- 1b: first supplement foil
- 2: second or further foil
- 2': leading edge of second foil
- 2a: second carrier foil
- 2b: second supplement foil
- 2c: second protective foil
- 3: laminated foil stack
- 100: apparatus
- 101: process chamber
- 102: conditioning means
- 110: first initial work position / first supply means / first supply reel
- 111: first roller of conveyor means
- 112: first leading foil edge detector
- 120: second initial work position / second supply means / second supply reel
- 121: first supply roller of second supply means
- 122: second supply roller of second supply means
- 123: second leading foil edge detector
- 124: aligning means
- 125: second pre-conditioning means
- 126: pressure roller of second pre-conditioning means (initial work position)
- 126': pressure roller of second pre-conditioning means (operating work position)
- 127: heating means of second pre-conditioning means
- 127': radiation of heating means
- 128: cooling means of second pre-conditioning means
- 130: laminating means
- 131: laminating drum
- 132: laminating roller (initial work position)
- 132': laminating roller (operating work position)
- 133: laminating roller support axis
- 134: pivot point of laminating roller support axis
- 135: contact roller support axis
- 136: contact roller of laminating means (initial work position)
- 136': contact roller of laminating means (intermediate work position)
- 136': contact roller of laminating means (operating work position)
- 137: pivot point of contact roller support axis
- 138: heating means of laminating drum
- 140: initial work position / collecting means / collecting reel
- 141: second roller of conveyor means
- 150: first pre-conditioning means
- 151: pre-conditioning area
- 160: pre-heating means of pressure roller
- 161: heating means of laminating drum
- 162: heating means of laminating roller
- 163: pre-heating means of contact roller

## Claims

1. Method for manufacturing a laminated foil stack consisting of at least a first foil and a second foil, said method comprising at least the steps of:
i) supplying said at least first foil to a first initial work position in a process chamber;
ii) supplying said at least second foil to a second initial work position in said process chamber;
iii) conditioning the environment inside said process chamber;
iv) supplying said first foil from said first initial work position to an intermediate work position in said process chamber whilst subjecting said first foil to a pre-conditioning process step in said process chamber;
v) laminating said conditioned first foil and said second foil thereby obtaining said laminated foil stack in a final work position.

2. Method according to claim 1, wherein step iv) further comprises the step of
vii) supplying said first foil from said intermediate work position back to said first initial work position.

3. Method according to claim 2, wherein step vii) is being performed whilst subjecting said first foil to said pre-conditioning process step.

4. Method according to any one or more of the claims 1-3, wherein the sequence of steps iv) and vii) is performed two or more times.

5. Method according to any one or more of the previous claims, wherein step iv) consists of a drying treatment.

6. Method according to any one or more of the previous claims, wherein step iv) consists of a pre-heating treatment.

7. Method according to any one or more of the previous claims, wherein step iv) consists of a radiation treatment.

8. Method according to any one or more of the previous claims, wherein step v) is preceded by at least the steps of:
viii) positioning a trailing edge of said second foil from said second initial work position in a lamination work position;
ix) positioning a trailing edge of said conditioned first foil from said first initial work position in said lamination work position;
x) aligning said first and second foil by pressing said first foil onto said second foil.

9. Method according to any one or more of the previous claims, wherein step
iv) further comprises the step of:
xi) subjecting said second foil to a conditioning process step.

10. Method according to claim 9, wherein step xi) consists of a pre-heating treatment.

11. Apparatus for manufacturing a laminated foil stack consisting of at least a first foil and a second foil, said apparatus comprising at least:
* a process chamber at least containing
* a first supply means for accommodating a certain length of a first foil
* a second supply means for accommodating a certain length of a second foil;
* laminating means for laminating said first and second foil being supplied from said first and second supply means thereby obtaining said laminated foil stack;
* collecting means for collecting said laminated foil stack, said apparatus further comprising:
* conditioning means for conditioning the environment inside said process chamber; as well as
* first pre-conditioning means for pre-conditioning at least said first foil prior to laminating.

12. Apparatus according to claim 11, wherein the conditioning means are arranged in controlling the temperature and/or the pressure and/or the gas composition inside the process chamber.

13. Apparatus according to claim 11 or 12, wherein said first pre-conditioning means comprise a pre-conditioning area as well as conveyor means for conveying said first foil from said first supply means through said pre-conditioning area towards said collection means.

14. Apparatus according to claim 13, wherein said conveyor means are arranged in conveying said first foil back and forth between said collection means and said first supply means.

15. Apparatus according to claims 13 of 14, wherein the first pre-conditioning means comprise at least one at least one radiation element for subjecting said first foil to radiation.

16. Apparatus according to any one or more of the claims 11-15, wherein said second supply means comprise second pre-conditioning means for pre-conditioning said second foil prior to laminating.

17. Apparatus according to claim 16, wherein said second pre-conditioning means comprise at least one radiation element for subjecting said second foil to radiation.

18. Apparatus according to claim 16, wherein said second pre-conditioning means comprise at least one cooling element for cooling said second foil.

19. Apparatus according to any one of the claims 16-18, wherein said second pre-conditioning means comprise at least one pressure roller for applying a pressure force on said second foil.

20. Apparatus according to any one or more of the claims 11-19, wherein said laminating means comprise a laminating drum as well as a laminating roller, which laminating drum and laminating roller are movable with respect to each other.

21. Apparatus according to claim 20, wherein said laminating means comprise a contact roller for contacting said first foil and said second foil prior to laminating.

22. Apparatus according to any one or more of the claims 19-21, wherein said pressure roller and/or said laminating drum and/or said laminating roller and/or said contact roller are provided with heating means for pre-heating their respective contact surface.
